# EUROPÄISCHE PATENTSCHRIFT

(11) **EP 3 931 062 B1**
(45) Veröffentlichungstag und Bekanntmachung des Hinweises auf die Patenterteilung: **15.11.2023**
(21) Anmeldenummer: 20714908.9
(22) Anmeldetag: 16.03.2020
(51) Int. Cl.: B61D 17/12, B61D 37/00

(54) **SCHIENENFAHRZEUGWAGEN MIT BEHÄLTER ZUR UNTERBRINGUNG VON ELEKTROGERÄTEN**
RAIL VEHICLE CARRIAGE COMPRISING A CONTAINER FOR HOUSING ELECTRICAL DEVICES
VOITURE DE VÉHICULE SUR RAILS COMPRENANT UN CONTENANT DESTINÉ À ABRITER DES APPAREILS ÉLECTRIQUES

(30) Priorität: 17.04.2019 DE 102019205595
(43) Veröffentlichungstag der Anmeldung: 05.01.2022
(73) Patentinhaber: Siemens Mobility GmbH, 81739 München (DE)
(72) Erfinder: TREUTLER, Helmut, 47804 Krefeld (DE); WILHELM, Markus, 41239 Mönchengladbach (DE)
(74) Vertreter: Siemens Patent Attorneys
(86) Internationale Anmeldenummer: PCT/EP2020/057046
(87) Internationale Veröffentlichungsnummer: WO 2020/212040

(56) Entgegenhaltungen:
- EP-A1- 2 789 521
- EP-A2- 1 702 825
- DE-A1-102013 214 310

## Beschreibung

Die Erfindung bezieht sich auf einen Schienenfahrzeugwagen zur Personenbeförderung mit einer Gepäckablage und einem Behälter für Elektrogeräte nach dem Oberbegriff von Anspruch 1. Ein solcher Schienenfahrzeugwagen ist beispielsweise aus der DE 10 2013 214 310 A1 bekannt, wobei der Behälter für Elektrogeräte in großem Abstand zu der Gepäckablage am Dach eines Fahrzeugrohbaus montiert ist.

In Schienenfahrzeugwagen zur Personenbeförderung ist eine wesentliche Aufgabe, die Sitzplatzanzahl für Fahrgäste möglichst zu maximieren. Allerdings benötigt ein mehrteiliges Schienenfahrzeug, das den Schienenfahrzeugwagen umfasst, auch Bauraum zur Unterbringung von Behältern für Elektrogeräte, die abgekürzt auch "E-Container" genannt werden, und elektrische Einrichtung aller Art enthalten können, wie beispielsweise Steuermodule.

Daher war es bisher üblich, solche E-Container oberhalb des Fußbodens oder auch als Untersitzcontainer einzubauen. Im ersten Fall fällt dadurch mögliche Nutzfläche für Fahrgastsitze fort, während im zweiten Fall eine Nutzung des betroffenen Schienenfahrzeugwagenbereichs für Sonderbereiche wie eine Galley eingeschränkt werden, da sie nicht ohne weiteres verlagert werden können.

Ausgehend hiervon liegt der Erfindung die Aufgabe zugrunde, einen Schienenfahrzeugwagen der eingangs genannten Art derart weiterzuentwickeln, dass grundsätzlich der zur Verfügung stehende Platz für Fahrgastsitze nicht eingeschränkt wird und auch eine zur Unterbringung von Gepäck vorgesehene Gepäckablage weitestgehend zur Verfügung steht.

Diese Aufgabe wird gelöst durch einen Schienenfahrzeugwagen nach Anspruch 1.

Dieser zeichnet sich dadurch aus, dass der Behälter für Elektrogeräte einen der Gepäckablage zugewandten Boden aufweist, der in seiner Kontur einer Kontur der Gepäckablage folgt.

Damit wird sichergestellt, dass keinerlei Platz zur Unterbringung von Fahrgastsitzen verloren geht. Die einzige Einschränkung hinsichtlich des Komforts für Fahrgäste besteht darin, dass über einen gewissen Längsabschnitt die an sich vorhandene und voll ausgestattete (z. B. Sitzplatzanzeige, Licht) Gepäckablage nicht zur Unterbringung von Gepäck zur Verfügung steht. Die Ausbildung des Behälters für Elektrogeräte als Hängeschrank gestattet es, ihn längs des Schienenfahrzeugwagens an passender Stelle unterzubringen, was beispielsweise auch bei einem Schienenfahrzeugwagen, in dem eine Galley oder ein anderer Sonderbereich vorgesehen ist, realisiert werden kann.

Der Längsabschnitt der Gepäckablage kann bevorzugt an einem Ende eines Innenraums des Schienenfahrzeugwagens angeordnet sein. Dies hat den Vorteil, dass die verfügbare Länge der Gepäckablage maximal durchgehend ist.

Der Behälter für Elektrogeräte weist einen der Gepäckablage zugewandten Boden auf, der in seiner Kontur einer Kontur der Gepäckablage folgt. In dieser Weise wird der oberhalb der Gepäckablage zur Verfügung stehende Bauraum optimal genutzt.

Der Behälter für Elektrogeräte kann mittels Halteelementen an einer Unterseite eines rohbauseitigen Daches des Schienenfahrzeugwagens befestigt sein. Insbesondere können die Halter auf der einen Seite mit dem Dach und auf der anderen Seite mit dem Behälter, bei dem es sich typischerweise um ein Metallgehäuse handelt, verschraubt sein.

Vorzugsweise schließt sich an eine einem Innenraum des Schienenfahrzeugwagens zugewandte obere vordere Kante des Behälters für Elektrogeräte in Querrichtung des Schienenfahrzeugwagens ein Deckenverkleidungsabschnitt an. Dies bewirkt eine günstige optische Integration des Behälters für Elektrogeräte in das Innendesign des Schienenfahrzeugwagens.

Eine einem Innenraum des Schienenfahrzeugwagens zugewandte Seite des Behälters für Elektrogeräte kann eine sich öffnen lassende Klappe aufweisen, so dass eine einfache Zugänglichkeit für den Behälter zu beispielsweise Wartungszwecken verwirklicht ist.

Bevorzugt ist eine einem Innenraum des Schienenfahrzeugwagens zugewandte Seite des Behälters für Elektrogeräte gegenüber einem vorderen, in Längsrichtung des Schienenfahrzeugwagens verlaufenden Trageholm der Gepäckablage in Richtung auf die Seitenwand versetzt.

Auch diese Maßnahme dient einer günstigen optischen Integration des Behälters für Elektrogeräte in das Innendesign des Schienenfahrzeugwagens.

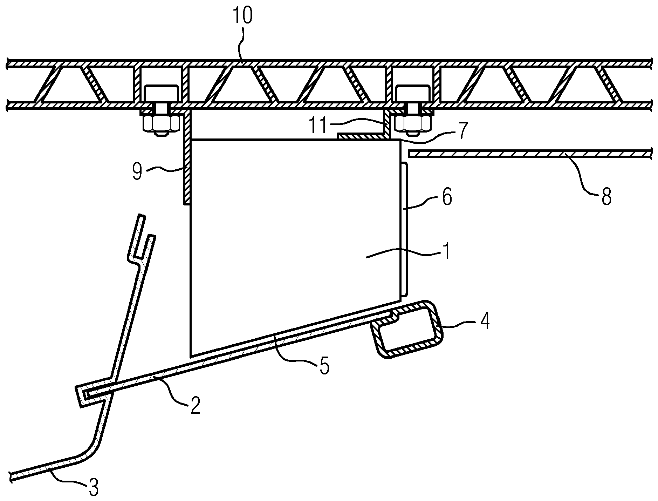

Ein Ausführungsbeispiel der Erfindung wird nachfolgend unter Bezugnahme auf die Zeichnung noch näher erläutert. Die einzige Figur zeigt eine Querschnittsansicht eines Gepäckablagenbereichs eines Schienenfahrzeugwagens.

Die Figur veranschaulicht einen als Hängeschrank ausgebildeten Behälter für Elektrogeräte (E-Container) 1, der oberhalb einer Gepäckablage 2 schwebend montiert ist. Die Gepäckablage 2 ist an einem Seitenwandabschnitt 3 eines Schienenfahrzeugwagens befestigt und verläuft von dem Seitenwandabschnitt 3 aus in Richtung auf den Fahrgastinnenraum schräg nach oben.

Ein vorderer Abschnitt der Gepäckablage 2 wird gebildet durch einen längs des Schienenfahrzeugwagens verlaufenden Trageholm 4.

Der Behälter für Elektrogeräte 1, der als Metallbehälter ausgeführt ist (Abschirmung), zeigt einen Behälterboden 5, der in seinem räumlichen Verlauf der Schräge der Gepäckablage 5 folgt, so dass der Boden 5 in Querrichtung der Gepäckablage 2 einen gleichbleibenden, geringen Abstand zu ihr einhält, so dass der oberhalb der Gepäckablage 2 verfügbare Bauraum optimal ausgenutzt wird.

Der Behälter 1 für Elektrogeräte weist an seiner Vorderseite, die einem Fahrgastinnenraum des Schienenfahrzeugwagens zugewandt ist, eine Klappe 6 auf, mit der sich der Behälter 1 für Elektrogeräte öffnen lässt, so dass beispielsweise Wartungs- oder Umbauarbeiten durchführbar sind.

An eine obere vordere Kante 7 des Behälters 1 für Elektrogeräte schließt sich ein Deckenverkleidungsabschnitt 8 an, so dass eine günstige optische Integration des Behälters 1 für Elektrogeräte gewährleistet ist. Dazu trägt außerdem bei, dass eine Vorderseite des Behälters 1 für Elektrogeräte in Querrichtung des Schienenfahrzeugwagens gegenüber dem Trageholm 4 ein Stück weit in Richtung Seitenwand versetzt ist.

Eine Befestigung des Behälters 1 für Elektrogeräte erfolgt mit Hilfe eines ersten Halteelements 9, das L-förmig ausgebildet ist und mit seiner einen Seite mit der Rückwand des Behälters 1 für Elektrogeräte verbunden ist, während sein anderes Ende mit einem Dach 10 des Schienenfahrzeugwagens, das hier als Flachdach aus Aluminiumprofilen vorliegt, verschraubt ist. Ein zweites Halteelement 11 ist einerseits an einer Oberseite des Behälters 1 für Elektrogeräte angebracht, während es andererseits mit dem Dach 10 verschraubt ist.

Die Gepäckablage 2 ist über eine gesamte Länge des Schienenfahrzeugwagens mit allen typischen Einrichtungen, wie einer Reservierungsanzeige und einer Beleuchtung ausgestattet. Bedarfsweise wird der Behälter 1 für Elektrogeräte, wie oben beschrieben ist, an einem geeigneten Längsabschnitt des Schienenfahrzeugwagens montiert, insbesondere über einem Endabschitt der Gepäckablage 2. Der Behälter 1 für Elektrogeräte kann sämtliche Anforderungen an die Fahrfähigkeit eines Zuges, zu dem der Schienenfahrzeugwagen gehört, erfüllen, so dass insbesondere auch Komponenten einer Zugsteuerung in diesen Behälter 1 für Elektrogeräte angeordnet werden können.

## Patentansprüche

1. Schienenfahrzeugwagen zur Personenbeförderung mit einer Gepäckablage (2) und einem Behälter (1) für Elektrogeräte, wobei der Behälter (1) für Elektrogeräte als Hängeschrank ausgebildet ist, der über einem Längsabschnitt der Gepäckablage (2) schwebend an einem Rohbau des Schienenfahrzeugwagens montiert ist,
**dadurch gekennzeichnet, dass**
der Behälter (1) für Elektrogeräte einen der Gepäckablage (2) zugewandten Boden (5) aufweist, der in seiner Kontur einer Kontur der Gepäckablage (2) folgt.

2. Schienenfahrzeugwagen nach Anspruch 1,
**dadurch gekennzeichnet, dass**
der Längsabschnitt der Gepäckablage (2) an einem Ende eines Innenraums des Schienenfahrzeugwagens angeordnet ist.

3. Schienenfahrzeugwagen nach einem der Ansprüche 1 oder 2,
**dadurch gekennzeichnet, dass**
der Behälter (1) für Elektrogeräte mittels Halteelementen (9, 11) an einer Unterseite eines rohbauseitigen Daches (10) des Schienenfahrzeugwagens befestigt ist.

4. Schienenfahrzeugwagen nach einem der Ansprüche 1 bis 3,
**dadurch gekennzeichnet, dass**
sich an eine einem Innenraum des Schienenfahrzeugwagens zugewandte obere vordere Kante (7) des Behälters (1) für Elektrogeräte in Querrichtung des Schienenfahrzeugwagens ein Deckenverkleidungsabschnitt (8) anschließt.

5. Schienenfahrzeugwagen nach einem der Ansprüche 1 bis 4,
**dadurch gekennzeichnet, dass**
eine einem Innenraum des Schienenfahrzeugwagens zugewandte Seite des Behälters (1) für Elektrogeräte eine sich öffnen lassende Klappe (6) aufweist.

6. Schienenfahrzeugwagen nach einem der Ansprüche 1 bis 5,
**dadurch gekennzeichnet, dass**
eine einem Innenraum des Schienenfahrzeugwagens zugewandte Seite des Behälters (1) für Elektrogeräte gegenüber einem vorderen, in Längsrichtung des Schienenfahrzeugwagens verlaufenden Trageholm (4) der Gepäckablage (1) in Richtung auf die Seitenwand versetzt ist.

## Claims

1. Rail vehicle carriage for passenger transport comprising a luggage compartment (2) and a container (1) for electrical devices, wherein the container (1) for electrical devices is designed as a wall-mounted cabinet which is mounted on a shell of the rail vehicle carriage, floating above a longitudinal section of the luggage compartment (2),
**characterized in that**
the container (1) for electrical devices has a floor (5) facing the luggage compartment (2), the contour of which follows a contour of the luggage compartment (2).

2. Rail vehicle carriage according to Claim 1,
**characterized in that**
the longitudinal section of the luggage compartment (2) is arranged at one end of an interior of the rail vehicle carriage.

3. Rail vehicle carriage according to either of Claims 1 and 2,
**characterized in that**
the container (1) for electrical devices is fixed to an underside of a roof (10) on the shell of the rail vehicle carriage by means of holding elements (9, 11).

4. Rail vehicle carriage according to one of Claims 1 to 3,
**characterized in that**
an upper front edge (7) of the container (1) for electrical devices that faces an interior of the rail vehicle carriage is adjoined by a ceiling lining section (8) in the transverse direction of the rail vehicle carriage.

5. Rail vehicle carriage according to one of Claims 1 to 4,
**characterized in that**
a side of the container (1) for electrical devices that faces an interior of the rail vehicle carriage has a flap (6) which may be opened.

6. Rail vehicle carriage according to one of Claims 1 to 5,
**characterized in that**
a side of the container (1) for electrical devices that faces an interior of the rail vehicle carriage is offset in the direction of the side wall relative to a front supporting bar (4) of the luggage compartment (1) which extends in the longitudinal direction of the rail vehicle carriage.

## Revendications

1. Voiture de véhicule ferroviaire pour le transport de passagers comprenant un logement (2) à bagage et un récipient (1) d'appareils électriques, dans lequel le récipient (1) d'appareils électriques est constitué en armoire suspendue, qui est montée par une partie longitudinale du logement (2) à bagage flottante sur un chaudron de la voiture de véhicule ferroviaire,
**caractérisée en ce que**
le récipient (1) d'appareils électriques a un fond (5) tourné vers le logement (2) à bagage, qui suit, dans son contour, un contour du logement (2) à bagage.

2. Voiture de véhicule ferroviaire suivant la revendication 1,
**caractérisée en ce que**
la partie longitudinale du logement (2) à bagage est disposée à une extrémité d'un espace intérieur de la voiture de véhicule ferroviaire.

3. Voiture de véhicule ferroviaire suivant l'une des revendications 1 ou 2,
**caractérisée en ce que**
le récipient (1) d'appareils électriques est fixé au moyen d'éléments (9, 11) de maintien à un côté inférieur d'un toit (10), du côté du chaudron, de la voiture de véhicule ferroviaire.

4. Voiture de véhicule ferroviaire suivant l'une des revendications 1 à 3,
**caractérisée en ce qu'**
une partie (8) d'habillage de plafond se raccorde, dans la direction transversale de la voiture du véhicule ferroviaire, à un bord (7) supérieur avant, tourné vers l'espace intérieur de la voiture de véhicule ferroviaire, du récipient (1) d'appareils électriques.

5. Voiture de véhicule ferroviaire suivant l'une des revendications 1 à 4,
**caractérisée en ce qu'**
un côté, tourné vers la face intérieure de la voiture du véhicule ferroviaire, du récipient (1) d'appareils électriques a un volet (6), qui peut s'ouvrir.

6. Voiture de véhicule ferroviaire suivant l'une des revendications 1 à 5,
**caractérisée en ce qu'**
un côté, tourné vers un espace intérieur de la voiture du véhicule ferroviaire, du récipient (1) d'appareils électriques est décalé vers la direction de la paroi latérale, par rapport à un longeron (4) de support, avant et s'étendant dans la direction longitudinale de la voiture du véhicule ferroviaire, du logement (1) à bagage.
